# EUROPEAN PATENT APPLICATION

(11) **EP 2 827 001 A1**
(43) Date of publication of application: **21.01.2015**
(21) Application number: 13760512.7
(22) Date of filing: 21.02.2013
(51) Int. Cl.: F04D 29/22, F04D 29/24, F04D 29/28, F04D 29/30

(54) **IMPELLER MANUFACTURING METHOD AND IMPELLER**

(30) Priority: 13.03.2012 JP 2012056227
(71) Applicant: Aisin Seiki Kabushiki Kaisha, Kariya-shi, Aichi 448-8650 (JP)
(72) Inventor: YAMAMOTO, Junya, Kariya-shi Aichi 448-8650 (JP); YOSHINO, Shoichi, Kariya-shi Aichi 448-8650 (JP)
(74) Representative: Kramer Barske Schmidtchen Patentanwälte PartG mbB
(86) International application number: PCT/JP2013/054328
(87) International publication number: WO 2013/136938

(57) **Abstract**

A low-cost impeller made of resin is provided that is manufactured by joining together parts that can be formed using a standard mold having a combination of a core and a cavity without using a slide core. The impeller is manufactured by the steps of forming, by molding, a first part including a base having a first annular surface with an annular shape in plan view, forming, by molding, a second part including a shroud having a second annular surface with an annular shape having an inner diameter larger than that of the first annular surface in bottom view, and a main blade portion including a plurality of thin-plate-like inclined portions only extending in a radial direction further inside than an inner circumferential surface of the shroud while being inclined with respect to a central axis of the shroud, the inclined portions not overlapping each other in plan view, and joining the first part and the second part together while causing the first annular surface and the second annular surface to face each other.

## Description

### Technical Field

The present invention relates to method for manufacturing an impeller used in a pump that causes fluid to flow, and impeller.

### Background Art

Impellers have been conventionally known as blade wheels of various pumps for causing fluid to flow. Recently, impellers made of resin have become more popular in order to meet a demand for lighter weight and lower cost.

Patent Document 1 discloses an impeller made of resin. The impeller of Patent Document 1 includes a shroud having an annular shape in plan view, a closed-end cylindrical rotor cup having the same central axis as that of the shroud, a hub having an annular shape in plan view and extending from an outer circumferential surface of the rotor cup, and a plurality of blades extending radially between the shroud and the hub and equally spaced circumferentially. Patent Document 1 also discloses a method for forming an impeller by integral molding.

### Citation List

### Patent Literature

Patent Document 1: JP 2011-174386 A

### Summary of Invention

### Technical Problem

In Patent Document 1, in order to form an impeller having a flow passage between each blade by integral molding, a mold having two slide cores is employed instead of a mold having only a combination of a core and a cavity (hereinafter referred to as a "standard mold"). However, if a mold having a slide core is used, the mold is likely to have a complicated structure and the number of manufacturing steps is likely to increase, leading to an increase in cost of the impeller.

In view of the above problems, it is an object of the present invention to provide a low-cost impeller made of resin that is manufactured by joining parts that can be molded using standard mold.

### Solution to Problem

To achieve the object, a method for manufacturing an impeller according to the present invention includes the steps of forming, by molding, a first part including a base having a first annular surface with an annular shape in plan view, forming, by molding, a second part including a shroud having a second annular surface with an annular shape having an inner diameter larger than that of the first annular surface in bottom view, and a main blade portion including a plurality of thin-plate-like inclined portions extending in a radial direction further inside than an inner circumferential surface of the shroud while being inclined with respect to a central axis of the shroud, the inclined portions not overlapping each other in plan view, and joining the first part and the second part together while causing the first annular surface and the second annular surface to face each other.

The impeller is divided into the first part and the second part, each of which is molded using a standard mold having a core and a cavity, and therefore, the cost of the molds can be reduced. Also, the absence of a slide core simplifies the structures of the molds, and therefore, the durability of the molds can be improved, and the yields of the first and second parts can be increased. Therefore, even though the subsequent step of joining the first part and the second part together is required, the impeller can be provided at low cost compared to when the impeller is formed by integral molding using a slide core.

In the impeller manufacturing method of the present invention, the main blade portion preferably further includes a plurality of thin-plate-like upright portions formed integrally with the inclined portions and extending from the second annular surface in a direction parallel to the central axis of the shroud and in the radial direction.

With such a manufacturing method, the main blade portion is formed by integrating the inclined portion and the upright portion together, and therefore, the main blade portion can have high strength.

In the impeller manufacturing method of the present invention, the base preferably further includes a plurality of thin-plate-like upright portions extending from the first annular surface in a direction parallel to a central axis of the base and in the radial direction.

In general, in injection molding, when a thin-plate-like (small thickness) portion has a large area, short shot may occur, so that the thin-plate-like portion is not sufficiently filled with resin. A reduction in the area of the thin-plate-like portion is effective in reducing the short shot defect. In this manufacturing method, the upright portion of the thin-plate-like main blade portion is formed in the base, i.e., the first part. Thus, the main blade portion is divided into an upright portion and an inclined portion, which are molded as separate parts (the first part and the second part), and therefore, short shot is less likely to occur in the main blade portion, and the first part and the second part can be manufactured with high yield. As a result, the impeller can be provided at low cost.

In the impeller manufacturing method of the present invention, the base preferably further includes a plurality of thin-plate-like first upright portions extending from the first annular surface in a direction parallel to a central axis of the base and in the radial direction. The main blade portion preferably further includes a plurality of thin-plate-like second upright portions formed integrally with the inclined portions and extending from the second annular surface in a direction parallel to the central axis of the shroud and in the radial direction. The first upright portion and the second upright portion are preferably joined together to form an upright portion.

In this manufacturing method, of the thin-plate-like main blade portion, the first upright portion that is a portion of the upright portion is formed in the base, i.e., the first part. The remainder of the upright portion that is the second upright portion and the inclined portion is formed in the shroud, i.e., the second part. Thus, the main blade portion is divided into two portions, which are molded as separate parts (the first part and the second part), and therefore, short shot is less likely to occur in the main blade portion, and the first part and the second part can be manufactured with high yield. As a result, the impeller can be provided at low cost.

To achieve the object, an impeller according to the present invention includes a base having a first annular surface with an annular shape in plan view, a shroud provided at a distance from the base in a direction of a central axis, and having a second annular surface with the same central axis as the central axis of the base and an inner diameter larger than an inner diameter of the first annular surface in bottom view, and a main blade portion having a plurality of thin-plate-like upright portions provided between the first annular surface and the second annular surface and extending in a direction parallel to the central axis and in a radial direction, and a plurality of thin-plate-like inclined portions formed so as to be continuous with the upright portions and extending in the radial direction further inside than an inner circumferential surface of the shroud while being inclined with respect to the central axis, the inclined portions not overlapping each other in plan view.

With such a configuration, the impeller are divided into two parts, each of which can be molded using a standard mold having a core and a cavity, and therefore, the cost of the molds can be reduced. Also, the absence of a slide core simplifies the structures of the molds, and therefore, the durability of the molds can be improved, and the yields of the parts can be increased. Therefore, even though the subsequent step of joining the parts together is required, the impeller can be provided at low cost compared to when the impeller is formed by integral molding using a slide core.

The impeller of the present invention preferably includes a joint portion provided at a boundary between the base and the upright portion so that the base and the upright portion are integrated together.

With such a configuration, the main blade portion including an inclined portion and an upright portion that are integrated together can be obtained, and therefore, an impeller having a main blade portion with high strength can be provided.

The impeller of the present invention preferably includes a joint portion provided at a boundary between the upright portion, and the second annular surface and the inclined portion, so that the upright portion, and the second annular surface and the inclined portion, are integrated together.

With such a configuration, the main blade portion is divided into two parts, which are molded. Therefore, compared to when the entire main blade portion is molded only in either part, the main blade portion is less likely to fail to be sufficiently filled with resin, i.e., the risk of short shot is reduced, and therefore, each part can be manufactured with high yield. As a result, the impeller can be provided at low cost.

In the impeller of the present invention, the upright portion preferably includes a first upright portion provided in the base and a second upright portion provided in the shroud. The impeller preferably includes a joint portion provided at a boundary between the first upright portion and the second upright portion so that the first upright portion and the second upright portion are integrated together.

With such a configuration, the main blade portion is divided into two parts, which are molded. Therefore, compared to when the entire main blade portion is molded only in either part, the main blade portion is less likely to fail to be sufficiently filled with resin, i.e., the risk of short shot is reduced, and therefore, each part can be manufactured with high yield. Moreover, any boundary may be set between the first upright portion and the second upright portion, whereby a part with a stable shape that is less likely to cause short shot can be obtained. As a result, the impeller can be provided at low cost.

### Brief Description of Drawings

FIG. 1 is a perspective view of an external appearance of an impeller according to this embodiment.
FIG. 2 is a plan view of an impeller of this embodiment.
FIG. 3 is a cross-sectional view of the impeller of FIG. 2, taken along line III-III.
FIG. 4 is a cross-sectional view of an impeller before a first part and a second part thereof are joined together.
FIG. 5 is a cross-sectional view of an impeller before a first part and a second part thereof are joined together.
FIG. 6 is a cross-sectional view of an impeller before a first part and a second part thereof are joined together.

### Description of Embodiments

### 1. Structure of Impeller

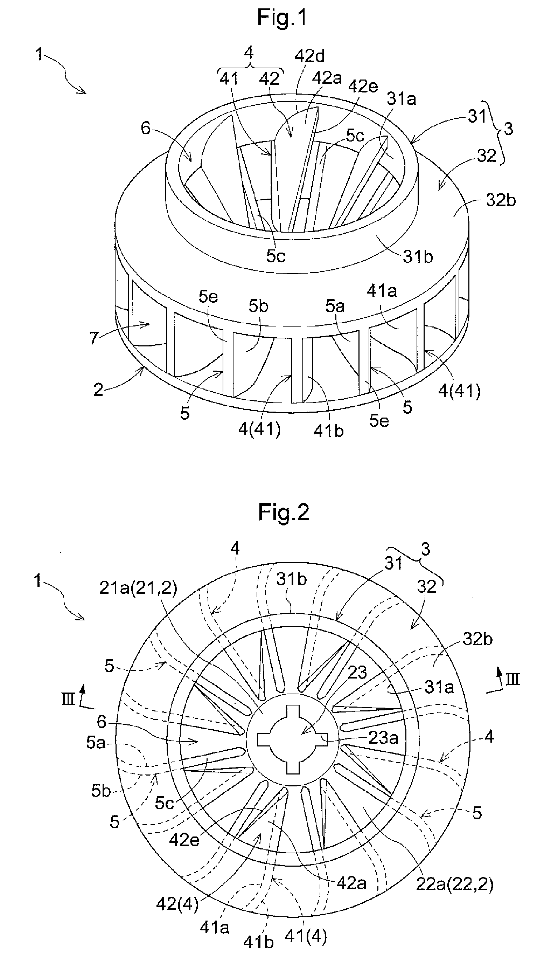

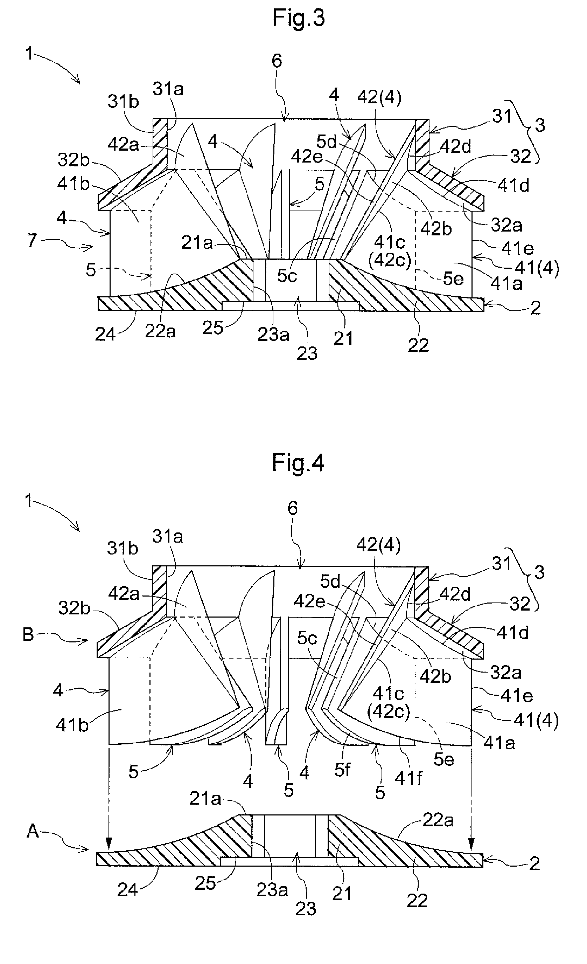

An impeller 1 according to this embodiment is formed of resin. As shown in FIG. 1, the impeller 1 includes a base 2, a shroud 3, a main blade portion 4, and a sub-blade portion 5. As shown in FIGS. 2 and 3, the impeller 1 has a shaft hole 23 having the same central axis as that of the impeller 1. When the impeller 1 is used, the shaft hole 23 is fitted and fixed to the shaft of a motor (not shown) that is a drive source for a pump (not shown). The impeller 1 rotates synchronously with the rotation of the shaft to force fluid in through an inlet 6 that is a space inside an inner circumferential surface 31 a of a cylindrical portion 31 of the shroud 3, and to force the fluid out through an outlet 7 that is a space between each main blade portion 4 and the corresponding sub-blade portion 5, thereby causing the fluid to flow.

As shown in FIGS. 2 and 3, the base 2 has an outer shape that is circular in plan view. The base 2 includes a central portion 21 that has a large thickness in the axial direction, and a peripheral portion 22 that is provided around the central portion 21 and becomes gradually thinner toward the outer circumference. The central portion 21 has an upper surface that is a central surface 21 a that is a circular flat surface having the same central axis as that of the outer shape. The central surface 21 a has the shaft hole 23 that has the same central axis as that of the outer shape and has a circular cross-section, and penetrates from the top surface to the bottom surface. The shaft hole 23 has four key grooves 23a that are provided radially outside the hole and are equally spaced circumferentially. A shaft of a motor of a pump is inserted into and fixed to the shaft hole 23. The shaft has keys that are engaged with and fixed to the key grooves 23a, thereby preventing the shaft from moving in the rotational direction. Therefore, the shaft and the impeller 1 rotate synchronously.

As shown in FIG. 3, the peripheral portion 22 has an upper surface that is a first annular surface 22a that curves and becomes gradually thinner radially outward from the outer circumference of the central surface 21 a, i.e., is concave upward. The peripheral portion 22 (the first annular surface 22a) is annular in plan view. The peripheral portion 22 has a lower surface that is a flat bottom surface 24. The bottom surface 24 has a recessed portion 25 around the central axis. Although, in this embodiment, as shown in FIG. 3, the first annular surface 22a curves along the radial direction, the present invention is not limited to this. The first annular surface 22a may have a shape that does not curve along the radial direction (a straight line shape).

The shroud 3 is disposed at a predetermined distance from and above the base 2 in the central axis direction, and has the same central axis as that of the base 2. The shroud 3 is annular in plan view. The shroud 3 includes the cylindrical portion 31 and an inclined annular portion 32. The cylindrical portion 31 has the same central axis as that of the base 2. The inner diameter of the inner circumferential surface 31 a and the outer diameter of an outer circumferential surface 31 b are both larger than the outer diameter of the central surface 21 a of the base 2 (the inner diameter of the first annular surface 22a) and smaller than the outer diameter of the first annular surface 22a. A space inside the inner circumferential surface 31 a serves as the inlet 6 for fluid.

The inclined annular portion 32 is formed to extend radially outward and downward continuously from a lower edge portion of the cylindrical portion 31. The inclined annular portion 32 has a second annular surface 32a that is annular in bottom view. The inner diameter of the second annular surface 32a is equal to that of the inner circumferential surface 31 a, and the outer diameter thereof is equal to that of the base 2. Although, as shown in FIG. 3, in this embodiment, the second annular surface 32a has a shape that does not curve along the radial direction, the second annular surface 32a may have a curved shape that is convex downward.

There are eight of the main blade portions 4, which are provided between the base 2 and the shroud 3 and equally spaced circumferentially. Each main blade portion 4 has an upright portion 41 and an inclined portion 42. The upright portion 41 is in the shape of a thin quadrangular plate that extends between the first annular surface 22a and the second annular surface 32a in a direction parallel to the central axis and in the radial direction. The upright portion 41 has four edge surfaces in the thickness direction, i.e., an inner edge 41 c, an upper edge 41 d, an outer edge 41 e, and a lower edge 41f. The upper edge 41 d is in contact with and integrated with the second annular surface 32a, extending from the innermost diameter to the outermost diameter. The lower edge 41f is in contact with and integrated with the first annular surface 22a, extending from the innermost diameter to the outermost diameter. As shown in FIG. 3, the inner edge 41c extends radially from outside to inside in a straight line. The outer edge 41e is flush with the outermost circumferences of the base 2 and the shroud 3.

The upright portion 41 extends radially from inside to outside in a flat surface, and then curves circumferentially in the vicinity of the outermost diameter. Of the surfaces parallel to the central axis, a concave surface is a pressure receiving surface 41 a, and a convex surface opposite to that surface is a back surface 41 b. Thus, by curving the upright portion 41 circumferentially in the vicinity of the outermost diameter, fluid can be efficiently forced out. Note that the upright portion 41 is not limited to such a shape, and may curve all the way along the radial direction from inside to outside, provided that the upright portion 41 is parallel to the central axis. Also, the upright portion 41 is not limited to the quadrangular shape or the number of the upright portions 41 is not limited to eight. The upright portion 41 may have an optimum shape or the number of the upright portions 41 may have an optimum value, depending on the shape of the base 2 or the shroud 3.

The inclined portion 42 is formed to extend and protrude radially further inside than the inner circumferential surface 31 a of the cylindrical portion 31, i.e., to protrude into the inlet 6. The inclined portion 42 is in the shape of a thin triangular plate, and has three edge surfaces in the thickness direction, i.e., a first edge 42c, a second edge 42d, and a third edge 42e. The first edge 42c is in contact with and integrated with the inner edge 41 c of the upright portion 41, and the second edge 42d is in contact with and integrated with the inner circumferential surface 31 a of the cylindrical portion 31. The triangular surface of the inclined portion 42 is a curved surface that is convex upward and is inclined with respect to the central axis direction. As shown in FIG. 2, the entirety of each inclined portion 42 is not hidden by the shroud 3 and can be visually seen in plan view, and the inclined portions 42 do not overlap. Of the triangular surfaces, one which can be visually seen in plan view is a pressure receiving surface 42a that receives pressure of entering fluid. The pressure receiving surface 42a is inclined with respect to the central axis direction, and therefore, the rotation of the impeller 1 forces fluid into the impeller 1 through the inlet 6.

The inclination of the pressure receiving surface 42a with respect to the central axis is determined based on the balance between the efficiency with which fluid is forced in and the resistance that is exerted on fluid when the fluid is forced in. This is because although a larger inclination of the pressure receiving surface 42a improves the efficiency with which fluid is forced in, an excessively large inclination increases an adverse effect that is caused due to an increase in the resistance that is exerted on fluid when the fluid is forced in. Also, as shown in FIGS. 1 and 2, in this embodiment, the second edge 42d of the inclined portion 42 that faces the inner circumferential surface 31 a of the cylindrical portion 31 is entirely in contact with and integrated with the inner circumferential surface 31 a of the cylindrical portion 31. However, not the entirety of the second edge 42d is necessarily required to be in contact with and integrated with the inner circumferential surface 31 a, and a portion of the second edge 42d may be integrated with the inner circumferential surface 31 a, or the second edge 42d may not at all be in contact with the inner circumferential surface 31a. Moreover, although, in FIGS. 1 and 3, the inclined portion 42 has a curved surface, the present invention is not limited to this, and the inclined portion 42 may have a flat surface. Moreover, the shape of the inclined portion 42 is not limited to the triangular shape, and may be an optimum shape as appropriate.

Although it is preferable that the entirety of each inclined portion 42 should not be hidden by the shroud 3 and can be visually seen in plan view, the present invention is not limited to this. A portion of the inclined portion 42 may be hidden below the shroud 3 in plan view. Note that, in this case, the hidden portion may not be in the shape of a flat plate.

One sub-blade portion 5 is provided between circumferentially adjacent ones of the upright portions 41 of the main blade portions 4. A total of eight sub-blade portions 5 are provided in the entire impeller 1. The sub-blade portion 5 of this embodiment has the same shape as that of the upright portion 41, and has a thin quadrangular shape that extends between the first annular surface 22a and the second annular surface 32a in a direction parallel to the central axis and in the radial direction. The sub-blade portion 5 has four edge surfaces in the thickness direction, i.e., an inner edge 5c, an upper edge 5d, an outer edge 5e, and a lower edge 5f. The upper edge 5d is in contact with and integrated with the second annular surface 32a, extending from the innermost diameter to the outermost diameter. The lower edge 5f is in contact with and integrated with the first annular surface 22a, extending from the innermost diameter to the outermost diameter. As shown in FIGS. 2 and 3, the inner edge 5c extends radially from outside to inside in a straight line. The outer edge 5e is flush with the outermost circumferences of the base 2 and the shroud 3.

The sub-blade portion 5 extends radially from inside to outside in a flat plane, and then curves circumferentially in the vicinity of the outermost diameter. Of the surfaces parallel to the central axis, a concave surface is a pressure receiving surface 5a, and a convex surface opposite to that surface is a back surface 5b. Thus, by curving the sub-blade portion 5 circumferentially in the vicinity of the outermost diameter, fluid can be efficiently forced out. Note that the sub-blade portion 5 is not limited to such a shape, and may curve all the way along the radial direction from inside to outside, provided that the sub-blade portion 5 is parallel to the central axis.

The sub-blade portion 5 is provided in order to efficiently force out fluid that has been forced in. This is because a larger number of blades are preferably used in order to more efficiently force fluid out as long as an adverse effect is not caused due to an increase in the resistance of the fluid. In the impeller 1 of this embodiment, there are eight blades of the inclined portions 42 in the inlet 6 of the cylindrical portion 31 that has a smaller diameter than that of the base 2, and there are eight blades of the upright portions 41 and eight blades of the sub-blade portions 5, i.e., a total of 16 blades, in the base 2. Such a configuration can minimize the adverse effect that is caused due to an increase in the resistance of the fluid, thereby causing the fluid to flow efficiently.

Although, in this embodiment, the sub-blade portion 5 has the same shape as that of the upright portion 41, these portions are not necessarily required to have the same shape, and may be designed to have optimum shapes as appropriate. Moreover, although, in this embodiment, one sub-blade portion 5 is provided between adjacent ones of the upright portions 41, i.e., a total of eight sub-blade portions 5 are provided, the present invention is not limited to this. Two or more sub-blade portions 5 may be provided between adjacent ones of the upright portion 41, i.e., a total of eight or more may be provided.

### 2. Method for Manufacturing Impeller

The impeller 1 of this embodiment is manufactured by joining two parts made of resin, a first part A and a second part B, together using a technique, such as vibration welding etc. The first part A and the second part B each have a shape that can be molded by injection molding using a "standard mold," such as a two-plate mold, a three-plate mold, etc., which has a combination of a core and a cavity, without using a slide core. A shape that can be molded using a standard mold means a shape that has a portion that can be visually seen in plan view and a portion that can be visually seen in bottom view, and therefore, allows the entirety of the parts to be visually seen. In other words, if there is a portion that cannot be visually seen in plan view or in bottom view, the shape cannot be molded using a standard mold. Note that, in some "standard molds" used in this embodiment, a molded product is released from the mold while twisting at least one of a core and a cavity.

Three sets of the first part A and the second part B that have different joint portions (boundaries) between the first part A and the second part B, of the impeller 1 of this embodiment, will now be described. Standard molds for molding the first part A and the second part B are each assumed to be opened and closed in a direction parallel to the central axis of the impeller 1. Note that a surface parallel to the central axis of the impeller 1, which is formed so as to be continuous with a surface that can be visually seen in plan view or in bottom view, can be formed using a draft provided in either a core or a cavity, and therefore, may not be described in detail, because such a surface can be visually seen in plan view or in bottom view.

(1) The impeller 1 having joint portions at boundaries between the base 2, and the main blade portion 4 and the sub-blade portion 5

FIG. 4 is a cross-sectional view of the impeller 1 before the first part A and the second part B are joined together. As shown in FIG. 4, the first part A includes only the base 2, and the second part B includes the shroud 3, the main blade portion 4, and the sub-blade portion 5. The central surface 21 a and the first annular surface 22a of the base 2 can be visually seen in plan view. The bottom surface 24 and the recessed portion 25 can be visually seen in bottom view. The shaft hole 23 including the key grooves 23a has a surface that is continuous with the central surface 21 a and the recessed portion 25, and is parallel to the central axis direction of the impeller 1, and therefore, can be visually seen. Therefore, all surfaces of the base 2 can be visually seen in plan view or in bottom view, and therefore, the base 2, i.e., the first part A can be molded using a standard mold.

When the second part B is viewed from above, a third annular surface 31c of the cylindrical portion 31 and a fourth annual surface 32b of the inclined annular portion 32, of the shroud 3, can be visually seen. As shown in FIG. 2, the inclined portion 42 does not overlap the inclined portion 42 adjacent thereto or the inner edge 5c of the sub-blade portion 5. Therefore, of the main blade portion 4, the pressure receiving surface 42a and the third edge 42e of the inclined portion 42 can be visually seen. Of the sub-blade portion 5, the inner edge 5c can be visually seen.

When the second part B is viewed from below, the second annular surface 32a of the inclined annular portion 32 of the shroud 3 can be visually seen. Of the main blade portion 4, the lower edge 41f of the upright portion 41, and the back surface 42b opposite to the pressure receiving surface 42a of the inclined portion 42, can be visually seen. Of the sub-blade portion 5, the lower edge 5f can be visually seen.

The pressure receiving surface 41 a, the back surface 41 b, and the outer edge 41 e of the upright portion 41 are each continuous with the lower edge 41f and parallel to the central axis direction of the impeller 1, and therefore, can be visually seen in bottom view. As described above, all surfaces of the inclined portion 42 can be visually seen in plan view or in bottom view. Therefore, all surfaces of the main blade portion 4 can be visually seen in plan view or in bottom view.

Similarly, the pressure receiving surface 5a, the back surface 5b, and the outer edge 5e of the sub-blade portion 5 are each continuous with the lower edge 5f and parallel to the central axis direction of the impeller 1, and therefore, can be visually seen in bottom view. Therefore, all surfaces of the sub-blade portion 5 can be visually seen in plan view or in bottom view. Also, all surfaces of the shroud 3 can be visually seen in plan view or in bottom view. Therefore, all surfaces constituting the second part B can be visually seen in plan view or in bottom view, and therefore, the second part B can be molded using a standard mold.

The impeller 1 including the first part A and the second part B is manufactured by the following steps. Initially, the first part A is formed by molding using a standard mold. Next, the second part B is formed by molding using a standard mold. Thereafter, the first annular surface 22a of the first part A and the second annular surface 32a of the second part B are placed to face each other, and are then joined together by vibration welding etc., where the first annular surface 22a, and the lower edge 41f of the upright portion 41 and the lower edge 5f of the sub-blade portion 5, form joint portions. By these three steps, the manufacture of the impeller 1 is completed. Of course, the step of forming the first part A and the step of forming the second part B may be switched, or the first part A and the second part B may be molded simultaneously in parallel. Thus, by molding the first part A and the second part B separately using respective standard molds to form the impeller 1, the cost of the molds can be reduced. Also, the structures of the molds can be simplified, leading to an improvement in the durability of the molds and an increase in the yields of the first part A and the second part B. Therefore, the impeller 1 can be provided at low cost. Also, the inclined portion 42 and the upright portion 41 are integrated together to form the main blade portion 4, so that the main blade portion 4 can have high strength.

(2) The impeller 1 having joint portions at boundaries between the upright portion 41 and the sub-blade portion 5, and the inclined portion 42 and the shroud 3

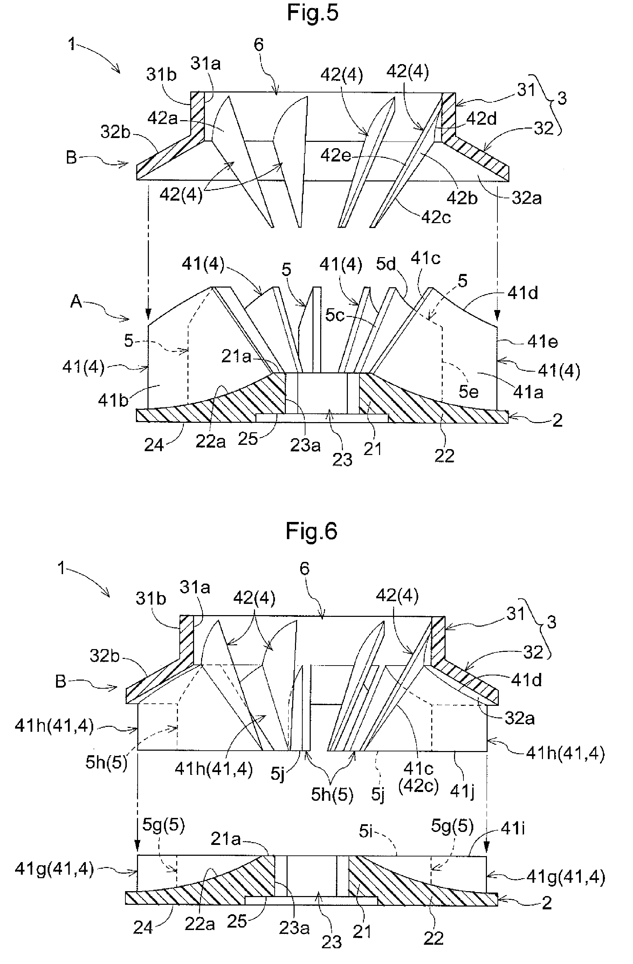

FIG. 5 is a cross-sectional view of the impeller 1 before the first part A and the second part B are joined together. As shown in FIG. 5, the first part A includes the base 2, the upright portion 41, and the sub-blade portion 5, and the second part B includes the shroud 3 and the inclined portion 42. Of the first part A, all surfaces of the base 2 can be visually seen in plan view or in bottom view, as described about the impeller 1 of the above section (1). When the first part A is viewed from above, the inner edge 41 c and the upper edge 41 d of the upright portion 41 can be visually seen. Of the sub-blade portion 5, the inner edge 5c and the upper edge 5d can be visually seen.

The pressure receiving surface 41 a, the back surface 41 b, and the outer edge 41 e of the upright portion 41 are each continuous with the upper edge 41 d and parallel to the central axis direction of the impeller 1, and therefore, can be visually seen in plan view. Therefore, all surfaces of the upright portion 41 can be visually seen in plan view.

Similarly, the pressure receiving surface 5a, the back surface 5b, and the outer edge 5e of the sub-blade portion 5 are each continuous with the upper edge 5d and parallel to the central axis direction of the impeller 1, and therefore, can be visually seen in plan view. Therefore, all surfaces of the sub-blade portion 5 can be visually seen in plan view. Therefore, all surfaces constituting the first part A can be visually seen in plan view or in bottom view, and therefore, the first part A can be molded using a standard mold.

The shroud 3 and the inclined portion 42 constituting the second part B can all be visually seen in plan view or in bottom view as described about the impeller 1 of the above section (1), and therefore, the second part B can be molded using a standard mold.

The impeller 1 including the first part A and the second part B is manufactured by the following steps. Initially, the first part A is formed by molding using a standard mold. Next, the second part B is formed by molding using a standard mold. Thereafter, the first annular surface 22a of the first part A and the second annular surface 32a of the second part B are placed to face each other, and are then joined together by vibration welding etc., where the inner edge 41 c of the upright portion 41 and the first edge 42c of the inclined portion 42 form a joint portion, and the upper edge 41 d of the upright portion 41 and the upper edge 5d of the sub-blade portion 5, and the second annular surface 32a of the shroud 3, form joint portions. By these three steps, the manufacture of the impeller 1 is completed. Of course, the step of forming the first part A and the step of forming the second part B may be switched, or the first part A and the second part B may be molded simultaneously in parallel. Thus, by molding the first part A and the second part B separately using respective standard molds to form the impeller 1, the cost of the molds can be reduced. Also, the structures of the molds can be simplified, leading to an improvement in the durability of the molds and an increase in the yields of the first part A and the second part B. Therefore, the impeller 1 can be provided at low cost.

Of the main blade portion 4 that is in the shape of a thin plate, the upright portion 41 is molded in the first part A, and the inclined portion 42 is molded in the second part B. Therefore, compared to when the entire main blade portion is molded only in either part, the main blade portion 4 is less likely to fail to be sufficiently filled with resin, i.e., the risk of short shot is reduced, and therefore, the first part A and the second part B can be manufactured with high yield. As a result, the impeller 1 can be provided at low cost.

Moreover, the second part B of the impeller 1 does not include the sub-blade portion 5, and therefore, the inclination angle of the inclined portion 42 with respect to the central axis can be increased as long as adjacent ones of the inclined portions 42 do not overlap. In other words, even if the inclined portion 42 and the sub-blade portion 5 of the finished impeller 1 overlap in plan view, the second part B can be molded using a standard mold. Therefore, the design flexibility of the inclination angle of the inclined portion 42 can be improved.

In order to improve the design flexibility of the inclination angle of the inclined portion 42, the first part A and the second part B may have other forms. For example, the first part A may include the base 2 and the sub-blade portion 5 while the second part B may include the shroud 3 and the main blade portion 4. In such a structure, the main blade portion 4 does not have a joint portion, and therefore, can have high strength.

(3) The impeller 1 in which two portions are joined together to form the upright portion 41

FIG. 6 is a cross-sectional view of the impeller 1 before the first part A and the second part B are joined together. As shown in FIG. 6, the upright portion 41 are divided into a first upright portion 41 g and a second upright portion 41 h, which are included in the first part A and the second part B, respectively. Also, the sub-blade portion 5 are divided into a first sub-blade portion 5g and a second sub-blade portion 5h, which are included in the first part A and the second part B, respectively. Therefore, the first part A includes the base 2, the first upright portion 41 g, and the first sub-blade portion 5g, and the second part B includes the shroud 3, the second upright portion 41 h, the inclined portion 42, and the second sub-blade portion 5h. A first middle edge 41i of the first upright portion 41 g and a first middle edge 5i of the first sub-blade portion 5g are located on the same plane as the central surface 21 a of the base 2.

Of the first part A, all surfaces of the base 2 can be visually seen in plan view or in bottom view as described about the impeller 1 of the above section (1). Also, the first upright portion 41 g and the first sub-blade portion 5g are portions of the upright portion 41 and the sub-blade portion 5, respectively. As described about the impeller 1 of the above section (2), all surfaces of the upright portion 41 and the sub-blade portion 5 can be visually seen in plan view. Therefore, all surfaces of the first upright portion 41 g and the first sub-blade portion 5g can also be visually seen in plan view. Therefore, all surfaces constituting the first part A can be visually seen in plan view or in bottom view, and the first part A can be molded using a standard mold.

As described about the impeller 1 in the above section (1), all surfaces of the shroud 3 and the inclined portion 42 of the second part B can be visually seen in plan view or in bottom view. Also, the second upright portion 41h and the second sub-blade portion 5h are portions of the upright portion 41 and the sub-blade portion 5, respectively, and all surfaces of the upright portion 41 and the sub-blade portion 5 can be visually seen in bottom view. Therefore, all surfaces of the second upright portion 41 h and the second sub-blade portion 5h can be visually seen in bottom view. Therefore, all surfaces constituting the second part B can be visually seen in plan view or in bottom view, and therefore, the second part B can be molded using a standard mold.

The impeller 1 including the first part A and the second part B is manufactured by the following steps. Initially, the first part A is molded by molding using a standard mold. Next, the second part B is molded by molding using a standard mold. Thereafter, the first annular surface 22a of the first part A and the second annular surface 32a of the second part B are placed to face each other, and are then joined together by vibration welding etc., where the first middle edge 41 i of the first upright portion 41 g and a second middle edge 41j of the second upright portion 41 h of the second part B form a joint portion, and the first middle edge 5i of the first sub-blade portion 5g of the first part A and a second middle edge 5j of the second sub-blade portion 5h of the second part B form a joint portion. By these three steps, the manufacture of the impeller 1 is completed. Of course, the step of forming the first part A and the step of forming the second part B may be switched, or the first part A and the second part B may be molded simultaneously in parallel. Thus, by molding the first part A and the second part B separately using respective standard molds to form the impeller 1, the cost of the molds can be reduced. Also, the structures of the molds can be simplified, leading to an improvement in the durability of the molds and an increase in the yields of the first part A and the second part B. Therefore, the impeller 1 can be provided at low cost.

Also, the main blade portion 4 is molded using two separate parts, and therefore, compared to when the entire main blade portion 4 is molded only in either part, the main blade portion 4 is less likely to fail to be sufficiently filled with resin, i.e., the risk of short shot is reduced, and therefore, each part can be manufactured with high yield. Moreover, any boundary may be set between the first upright portion 41 g and the second upright portion 41 h, whereby a part with a stable shape that is less likely to cause short shot can be obtained. As a result, the impeller 1 can be provided at low cost.

In the case of vibration welding, parts having flat surfaces can be joined with higher stability and more sufficient strength. In the impeller 1 of the above section (3), the first middle edge 41 i of the first upright portion 41 g and the first middle edge 5i of the first sub-blade portion 5g, which form a joint portion, are each a flat surface, and therefore, the first part A and the second part B can be joined with stability.

Although, in the impeller 1 of the above section (3), the first middle edge 41 i of the first upright portion 41 g and the first middle edge 5i of the first sub-blade portion 5g are on the same plane as the central surface 21 a, these edges may only be parallel to the central surface 21 a. Alternatively, the first middle edge 41 of the first upright portion 41 g and the first middle edge 5i of the first sub-blade portion 5g may not be parallel to the central surface 21 a, and may be inclined with respect to the central surface 21 a, for example. Moreover, the first middle edge 41i of the first upright portion 41 g and the first middle edge 5i of the first sub-blade portion 5g may not be a flat surface, and may be a curved surface, a step-like surface, or a zigzag surface.

Although, in the impeller 1 of the above section (3), the first upright portion 41g and the first sub-blade portion 5g have the same shape, these portions may have different shapes. For example, when the upright portion 41 and the sub-blade portion 5 have different shapes, then if the first upright portion 41 g and the first sub-blade portion 5g have different shapes, the first upright portion 41g and the first sub-blade portion 5g, and the second upright portion 41 h and the second sub-blade portion 5h, can be easily positioned in the joining step.

In the impellers 1 of the above sections (1) to (3), in order to allow the first part A and the second part B to be molded using standard molds, each inclined portion 42 is caused to have a shape the entire of which can be visually seen without a portion being hidden by the shroud 3 in plan view. However, the present invention is not limited to this. A portion of the inclined portion 42 may be hidden below the shroud 3 in plan view. Note that, in this case, if the inclined portion 42 is molded using a standard mold, a portion hidden by the shroud 3 may not be in the shape of a thin plate.

### Industrial Applicability

The present invention is applicable to a method for manufacturing an impeller used in a pump that causes fluid to flow, and an impeller.

### Reference Signs List

- 1: IMPELLER
- 2: BASE
- 3: SHROUD
- 4: MAIN BLADE PORTION
- 22a: FIRST ANNULAR SURFACE (JOINT PORTION)
- 31a: INNER CIRCUMFERENTIAL SURFACE
- 32a: SECOND ANNULAR SURFACE (JOINT PORTION)
- 41: UPRIGHT PORTION (JOINT PORTION)
- 41g: FIRST UPRIGHT PORTION (JOINT PORTION)
- 41h: SECOND UPRIGHT PORTION (JOINT PORTION)
- 42: INCLINED PORTION (JOINT PORTION)
- A: FIRST PART
- B: SECOND PART

## Claims

1. A method for manufacturing an impeller, comprising the steps of:
forming, by molding, a first part including a base having a first annular surface with an annular shape in plan view;
forming, by molding, a second part including a shroud having a second annular surface with an annular shape having an inner diameter larger than that of the first annular surface in bottom view, and a main blade portion including a plurality of thin-plate-like inclined portions extending in a radial direction further inside than an inner circumferential surface of the shroud while being inclined with respect to a central axis of the shroud, the inclined portions not overlapping each other in plan view; and
joining the first part and the second part together while causing the first annular surface and the second annular surface to face each other.

2. The method for manufacturing the impeller according to claim 1, wherein
the main blade portion further includes a plurality of thin-plate-like upright portions formed integrally with the inclined portions and extending from the second annular surface in a direction parallel to the central axis of the shroud and in the radial direction.

3. The method for manufacturing the impeller according to claim 1, wherein
the base further includes a plurality of thin-plate-like upright portions extending from the first annular surface in a direction parallel to a central axis of the base and in the radial direction.

4. The method for manufacturing the impeller according to claim 1, wherein
the base further includes a plurality of thin-plate-like first upright portions extending from the first annular surface in a direction parallel to a central axis of the base and in the radial direction,
the main blade portion further includes a plurality of thin-plate-like second upright portions formed integrally with the inclined portions and extending from the second annular surface in a direction parallel to the central axis of the shroud and in the radial direction, and
the first upright portion and the second upright portion are joined together to form an upright portion.

5. An impeller comprising:
a base having a first annular surface with an annular shape in plan view;
a shroud provided at a distance from the base in a direction of a central axis, and having a second annular surface with the same central axis as the central axis of the base and an inner diameter larger than an inner diameter of the first annular surface in bottom view; and
a main blade portion having a plurality of thin-plate-like upright portions provided between the first annular surface and the second annular surface and extending in a direction parallel to the central axis and in a radial direction, and a plurality of thin-plate-like inclined portions formed so as to be continuous with the upright portions and extending in the radial direction further inside than an inner circumferential surface of the shroud while being inclined with respect to the central axis, the inclined portions not overlapping each other in plan view.

6. The impeller according to claim 5, comprising:
a joint portion provided at a boundary between the base and the upright portion so that the base and the upright portion are integrated together.

7. The impeller according to claim 5, comprising:
a joint portion provided at a boundary between the upright portion, and the second annular surface and the inclined portion, so that the upright portion, and the second annular surface and the inclined portion, are integrated together.

8. The impeller according to claim 5, wherein
the upright portion includes a first upright portion provided in the base and a second upright portion provided in the shroud, and the impeller includes a joint portion provided at a boundary between the first upright portion and the second upright portion so that the first upright portion and the second upright portion are integrated together.
